# EUROPÄISCHE PATENTSCHRIFT

(11) **EP 1 525 143 B1**
(45) Veröffentlichungstag und Bekanntmachung des Hinweises auf die Patenterteilung: **19.09.2007**
(21) Anmeldenummer: 03783977.6
(22) Anmeldetag: 12.06.2003
(51) Int. Cl.: B65D 77/20, B65D 75/30

(54) **VERSCHLUSSEINRICHTUNG FÜR EINEN VERPACKUNGSBEHÄLTER**
SEALING DEVICE FOR A PACKAGING CONTAINER
DISPOSITIF DE FERMETURE POUR CONTENANT D'EMBALLAGE

(30) Priorität: 29.07.2002 CH 13262002
(43) Veröffentlichungstag der Anmeldung: 27.04.2005
(73) Patentinhaber: Zane International Inc., 8039 Zürich (CH)
(72) Erfinder: ZRNOVSKY, Peter, 811 03 Bratislava (SK)
(74) Vertreter: Luchs, Willi
(86) Internationale Anmeldenummer: PCT/EP2003/006185
(87) Internationale Veröffentlichungsnummer: WO 2004/014757

(56) Entgegenhaltungen:
- EP-A- 0 431 391
- EP-A- 1 138 610
- WO-A-03/013976
- US-A- 4 913 307
- US-A- 5 145 737
- US-A- 5 882 789

## Beschreibung

Die Erfindung betrifft eine Verschlusseinrichtung für einen Verpackungsbehälter, mit einem ersten und einem zweiten Behälterteil, die durch einen gebildeten Randstreifen durch Verschweissen aneinander verschliessbar sind, wobei sie durch Auseinanderziehen voneinander lösbar und anschliessend wiederverschliessbar sind, wobei zumindest der eine Behälterteil aus einer Mehrschichtfolie mit mindestens einer Innenschicht, einer Klebschicht und einer Aussenschicht, indessen der andere Behälterteil aus wenigstens einem Folienmaterial hergestellt ist.

Bei einer kalt- oder heissiegelbaren Mehrschichtfolie für wiederverschliessbare Verpackungen nach der Druckschrift EP-A-0 160 975 ist eine äussere Trägerfolie, eine permanent klebende Schicht, eine Adhäsivschicht und eine Abdeckschicht vorgesehen, mittels derer es grundsätzlich möglich ist, eine Verpackung wiederverschliessbar auszugestalten. Für die Klebschicht ist ein solches Material gewählt, dass ihre Haftkraft an der Innenschicht weniger als die Haftkraft der Innenschicht am Folienmaterial des anderen Behälterteils beträgt.

Eine gattungsmässige Behälterverschliessanordnung gemäss der Druckschrift EP-A-0 868 368 ist mit einer Mehrschichtfolie versehen, die eine Haftschicht aufweist, welche durch Aufbringen eines Harzes mit einer Mindestdicke von 10 Mikrometern und insbesondere eine solche mit 20 Mikrometern oder mehr gebildet ist.

Das Dokument US-A-5,882,789 bezieht sich auf eine Verschliesseinrichtung für Verpackungsbehälter. Bei dieser Einrichtung werden zwei Behälterteile durch ein zusätzliches, zwischen diesen randseitig befindliches Band miteinander verschweisst. Nachteilig bei dieser Verwendung eines Bandes ist nebst dem zusätzlichen Vorsehen eines solchen Bandes die Bildung von spaltförmigen Zwischenräumen der beiden Folien im verschlossenen Zustand. Hieraus können sich Rückstände zum einen von der in diesem Behälter aufbewahrten Ware und zum andern von aussen her irgendwelche Ablagerungen bilden.

Bei der Lösung nach der Druckschrift US-A-4,913,307 muss ein zusätzliches Werkzeug verwendet werden, mittels welchem die Mehrschichtfolie des oberen Behälterteils zur Bildung einer Rissstelle eingedrückt werden muss. Dies bewirkt aber den Nachteil, dass man damit die Mehrschichtfolie durch diese eingearbeiteten Kerben bei der Verschlussstelle erheblich schwächt. Nach dem Einfüllen der Ware in den einen Behälterteil und dem Draufsetzen bzw. Verschweissen des andern Behälterteils wird durch dieses Vorsehen solcher Kerben die Materialstärke der Folie an diesen Stellen erheblich reduziert oder sogar unterbrochen (siehe Fig. 8). Damit besteht die Gefahr, dass diese obere Folienschicht bei einer geringen Belastung an dieser geschwächten Stelle reisst. Es fehlt bei diesem einen Behälterteil auch eine Innenschicht und es liegt ohnehin ein anderes Funktionsprinzip vor, und zwar kann der als Deckel ausgebildete obere Behälterteil nicht wieder verschlossen werden.

Aufgabe der vorliegenden Erfindung besteht darin, eine Verschlusseinrichtung nach der eingangs erwähnten Gattung derart weiterzubilden, dass mit ihr eine einfache und kostengünstige Herstellung ermöglicht wird und dabei die Wiederverschliessbarkeit der Verpackung vollauf gegeben ist.

Die Aufgabe ist erfindungsgemäss durch die kennzeichnenden Merkmale des Anspruches 1 gelöst.

Mit dieser erfindungsgemässen Ausbildung der Mehrschichtfolie des einen Behälterteils wird in überraschender Weise trotz der sehr dünnen Klebschicht eine völlig ausreichende Haftkraft über eine ausreichende Anzahl von Wiederverschliessungen erreicht. Ferner kann damit eine Reduktion des relativ teuren Materials der zu verwendenden Klebschicht und auch des Verpackungsgewichtes insgesamt erzielt werden.

Sehr vorteilhaft ist diese Klebschicht mit einer Dauerklebewirkung zumindest teilweise aus einem lösungsmittelfreien Heissschmelzklebstoff gefertigt.

Ausführungsbeispiele der Erfindung sowie weitere Vorteile derselben sind nachfolgend anhand der Zeichnung näher erläutert. Es zeigt:
- Fig.1: einen Teilschnitt einer erfindungsgemässen Verschlusseinrichtung eines Verpackungsbehälters,
- Fig.2: eine vergrösserte Darstellung der Verschlusseinrichtung gemäss Fig.1, und
- Fig.3: eine Draufsicht des Verpacksungsbehälters nach Fig.1.

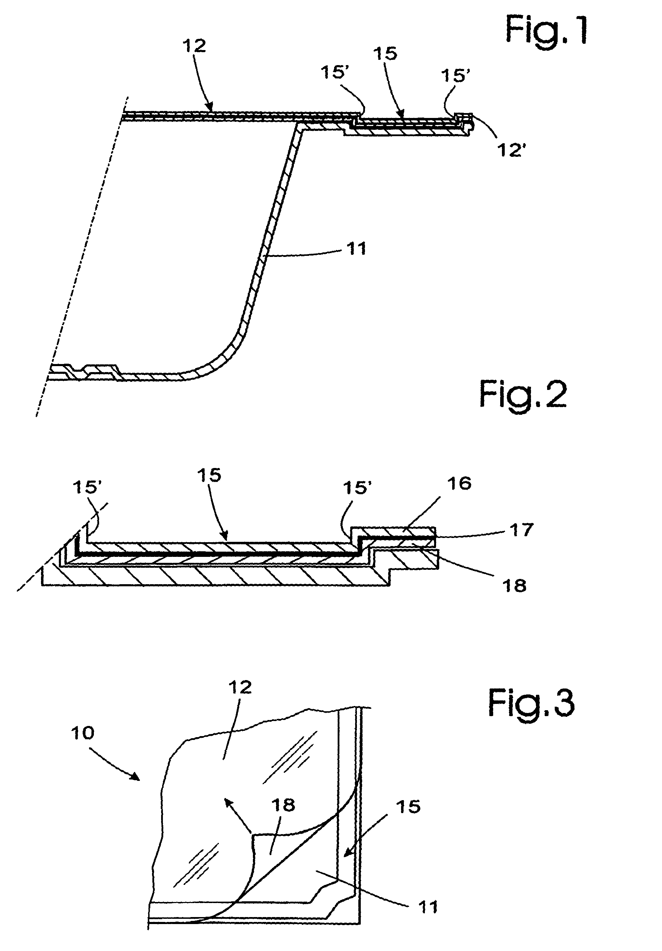

Fig.1 bis Fig.3 zeigen in teilweisem Schnitt eine Verschlusseinrichtung 15 für einen Verpackungsbehälter 10, der aus einem ersten Behälterteil 11 und einem zweiten Behälterteil 12 gebildet ist, wobei im vorliegenden Ausführungsbeispiel der untere Behälterteil 11 als Schale aus einem annähernd steifen Folienmaterial und der andere Behälterteil 12 als abdeckende Mehrschichtfolie ausgebildet ist. In diese Schale können beliebige Esswaren bzw. Lebensmittel oder sonstige Artikel eingefüllt sein.

Die Behälterteile 11, 12 bilden je einen flachen Aussenrand, bei denen diese Ränder 15 durch Verschweissen aneinander verschliessbar sind. Diese Behälterteile 11, 12 können in an sich bekannter Weise durch Auseinanderziehen voneinander gelöst und anschliessend vorteilhaft mehrmals wiederverschlossen werden. Zumindest der die Schale abdeckende eine Behälterteil 12 ist aus einer Mehrschichtfolie mit mindestens einer Innenschicht 18, einer Klebschicht 17 und einer Aussenschicht 16, indessen der andere Behälterteil 11 aus wenigstens einem Folienmaterial hergestellt ist.

Im Prinzip könnte im Rahmen der Erfindung auch der Behälterteil 11 aus einer Mehrschichtfolie und der den Deckel bildende Behälterteil 12 aus einem Folienmaterial hergestellt sein.

Erfindungsgemäss weist die zwischen der Innenschicht und der Aussenschicht vorgesehene Klebschicht 17 eine Dicke von weniger als 10 Mikrometern, vorzugsweise einer solche von maximal 8 Mikrometern auf.

Mit dieser Klebschicht 17 kann eine gewünschte Haftkraft pro Flächeneinheit bei der ersten Schliessung von grösser als 4 N/cm² und beim Wiederverschliessen eine solche von grösser als ca. 1 N/cm² erzielt werden. Somit ergibt sich eine optimale Benutzerfreundlichkeit, d.h. ein Benutzer kann einen solchen Behälter mit relativ leichtem Kraftaufwand mehrmals öffnen und nach dem Herausnehmen des entsprechenden Artikels wieder ohne grossen Kraftaufwand verschliessen.

Für die Klebschicht 17 ist ein solches Material gewählt, dass ihre Haftkraft an der Innenschicht 18 geringer als die Haftkraft der Innenschicht 17 am Folienmaterial des anderen Behälterteils 11 ist, so dass sich bei den Rändern 15 beim Lösen der Mehrschichtfolie von der Schale die Klebschicht zumindest teilweise von der Innenschicht 18 und/oder von der Aussenschicht 16 trennt und an der Aussenschicht 16 und/oder an der Innenschicht 18 haften bleibt. Bei einer konketen Ausführung verhält es sich so, dass sich nach dem Öffnen der Mehrschichtfolie ein über den ganzen Umfang des Randstreifens 15 durchgehender Teil der Klebschicht auf der Innenschicht 18 und ein Teil auf der Aussenschicht 16 haftet.

Diese Klebschicht ist mit einer Dauerklebewirkung zumindest teilweise aus einem lösungsmittelfreien Heissschmelzklebstoff gefertigt. Als Heissschmelzklebstoff eignen sich solche, die frei von flüchtigen und/oder zur Migration fähigen Verunreinigungen sind. Ein solcher Heissschmelzklebstoff enthält in der Regel wenigstens ein thermoplastisches Harz, wie zum Beispiel Polyethylen, Polypropylen, Copolymere von Olefinen wie Methacrylsäure, Polyethylen-Wachse oder Lotryl.

Die den einen Behälterteil 12 bildende Mehrschichtfolie ist mit dem anderen Behälterteil 11 unter Bildung des Randstreifens 15 derart verschweisst, dass bei der Innenschicht 18 bei den Kanten des Randstreifens 15 eine Schwächung erzeugt ist, so dass diese Innenschicht 18 beim Lösen der Mehrschichtfolie zum Öffnen des Verpackungsbehälters 10 bei diesen Kanten reisst.

Diese Schwächung bei den Ränderkanten kann durch Druckbeaufschlagung der für das Verschweissen der Mehrschichtfolie mit dem anderen Behälterteil 11 verwendeten Formen erzeugt werden, wobei es sich um ein Dauer-, Impuls-, Infrarot-, Glühband-, Ultraschallschweissen handeln kann. Diese Schwächung kann aber auch erreicht werden, indem eine spezielle Schicht aus einem Kunststoffmaterial, vorzugsweise aus Polypropylen, Polystyrol und deren Copolymeren oder Polyethylen mittlerer und hoher Dichte, verwendet wird. Diese Schicht ist vorteilhaft an der Innenschicht 18 angeordnet und steht direkt mit der Klebstoffschicht 17 in Berührung.

Bei der Aussenschicht 16 kann eine Barriereschicht aus einem thermoplastischen Kunststoff-Film vorgesehen sein, die vorteilhaft eine Dicke von 5 bis 20 Mikrometern aufweist. Ausserdem kann die Aussenschicht aus einem flexiblen oder starren Film aus Metall und/oder Kunststoff hergestellt sein.

Die Erfindung ist mit den oben erläuterten Ausführungsbeispielen ausreichend dargetan. Sie liesse sich jedoch noch in anderen Varianten darstellen. Als Behälterteile könnten auch Wände von Beuteln, Eimern oder Hüllen von Artikeln, bspw. Schokolade, oder dergleichen vorgesehen sein.

## Patentansprüche

1. Verschlusseinrichtung für einen Verpackungsbehälter, mit einem ersten und einem zweiten Behälterteil (11, 12), die durch einen gebildeten Randstreifen (15) durch Verschweissen aneinander verschliessbar sind, wobei sie durch Auseinanderziehen voneinander lösbar und anschliessend wiederverschliessbar sind, wobei zumindest der eine Behälterteil (12) aus einer Mehrschichtfolie mit mindestens einer Innenschicht (18), einer Klebschicht (17) und einer Aussenschicht (16), indessen der andere Behälterteil (11) aus wenigstens einem Folienmaterial hergestellt ist, **dadurch gekennzeichnet, dass**
die zwischen der Innenschicht (18) und der Aussenschicht (16) vorgesehene Klebschicht (17) eine Dicke von weniger als 10 Mikrometern, vorzugsweise eine Dicke von maximal 8 Mikrometern aufweist, dass der als Vertiefung gebildete Randstreifen (15) sowohl beim einen als auch beim andern Behälterteil (11, 12) ausgebildet ist, und bei diesem Randstreifen (15) Innenkanten (15') vorhanden sind, bei denen auf die Innenschicht (18) eine Schwächung erzeugt ist, so dass diese Innenschicht beim Lösen der Mehrschichtfolie zum Öffnen des Behälters entlang dieser Innenkanten (15') reisst.

2. Verschlusseinrichtung nach Anspruch 1, **dadurch gekennzeichnet, dass** die Innenschicht (18) der Mehrschichtfolie bei den Randstreifen (15) mit dem Folienmaterial verschweisst ist und dabei für die Klebschicht (17) ein solches Material gewählt ist, dass ihre Haftkraft an der Innenschicht (18) geringer als die Haftkraft der Innenschicht (18) am Folienmaterial des anderen Behälterteils (11) ist, so dass sich beim Randstreifen (15) beim Lösen der Mehrschichtfolie die Klebschicht (17) zumindest teilweise von der Innenschicht (18) und/oder von der Aussenschicht trennt (16) und an der Aussenschicht und/oder an der Innenschicht haften bleibt, indessen die Innenschicht (18) am Folienmaterial des anderen Behälterteils (11) haften bleibt.

3. Verschlusseinrichtung nach Anspruch 1 oder 2, **dadurch gekennzeichnet, dass** die Klebschicht (17) mit einer Dauerklebewirkung zumindest teilweise aus einem lösungsmittelfreien Heissschmelzklebstoff gefertigt ist.

4. Verschlusseinrichtung nach einem der vorhergehenden Ansprüche 1 bis 3, **dadurch gekennzeichnet, dass** die Schwächung bei den Kanten (15') des Randstreifens (15) durch Druckbeaufschlagung der für das Verschweissen der Mehrschichtfolie mit dem anderen Behälterteil (11) verwendeten Werkeugformen erzeugt ist.

5. Verschlusseinrichtung nach einem der vorhergehenden Ansprüche 1 bis 3, **dadurch gekennzeichnet, dass** die Schwächung der Kanten (15') und damit ein leichtes Aufreissen der Innenschicht (18) bei diesen Kanten erzeugt ist, indem eine spezielle Schicht aus einem Kunststoffmaterial, vorzugsweise Polypropylen, Polystyrol und deren Copolymere oder Polyethylen mittlerer und hoher Dichte, verwendet wird.

6. Verschlusseinrichtung nach einem der vorhergehenden Ansprüche 1 bis 5, **dadurch gekennzeichnet, dass** eine Barriereschicht aus einem thermoplastischen Kunststoff-Film bei der Aussenschicht (16) vorgesehen ist, die eine Dicke von 5 bis 20 Mikrometern aufweist.

7. Verschlusseinrichtung nach einem der vorhergehenden Ansprüche 1 bis, 6, **dadurch gekennzeichnet, dass** die Aussenschicht (16) aus einem flexiblen oder starren Film aus Metall und/oder Kunststoff hergestellt ist.

8. Verschlusseinrichtung nach einem der vorhergehenden Ansprüche 1 bis 7, **dadurch gekennzeichnet, dass** der äussere Rand (12') der Mehrschichtfolie annähernd bündig zur Aussenseite des Randstreifens (15) angeordnet ist.

9. Verschlusseinrichtung nach einem der vorhergehenden Ansprüche 1 bis 8, **dadurch gekennzeichnet, dass** mit dieser Klebschicht (17) eine gewünschte Haftkraft pro Flächeneinheit bei der ersten Schliessung von grösser als 4 N/cm² und beim Wiederverschliessen eine solche von grösser als ca. 1 N/cm² vorliegt.

## Claims

1. Sealing device for a packaging container, said device comprising a first and a second container part (11, 12), which can be sealed with one another by welding formed by a border strip (15), whereby they be detached from one another again by separation and can then be resealed, whereby at least one container part (12) is configured from a multi-layer film with at least one inner layer (18), an adhesive layer (17) and an outer layer (16), while the other container part (11) is configured from at least one film material, **characterized in that**
the adhesive layer (17), that is provided between the inner layer (18) and the outer layer (16), has a thickness of less than 10 micrometers, preferable a maximum thickness of 8 micrometers, that the border strip (15) formed as a cavity is shaped with the one as well as with the other container part (11, 12), and at this border strip (15) inner borders (15') are provided, with which is produced a weakening, so that the inner layer is tearing along these inner borders (15') with the detachment of the multi-layer film to open the container.

2. Sealing device according to claim 1, **characterized in that** the inner layer (18) of the multi-layer film is welded with the film material at the border strip (15) and it is selected for the adhesive layer (17) such a material, that its adhesion at the inner layer (18) is less than the adhesion of the inner layer (18) at the film material of the other container part (11), so that at the border strip (15) with the detachment of the multi-layer film the adhesive layer (17) at least partly detach from the inner layer (18) and/or from the outer layer (16) and is remaining to adhere at the outer layer and/or at the inner layer, meanwhile the inner layer (18) is remaining to adhere at the film material of the other container part (11).

3. Sealing device according to claim 1 or 2, **characterized in that** the adhesive layer (17) consists of at least partly of a solvent free hot melt adhesive with a long enduring adhering effect.

4. Sealing device according to anyone of the claims 1 to 3, **characterized in that** the weakening of the borders (15') of the border strip (15) is configured from pressure of the tool mold used for the welding of the multi-layer film with the other container part (11).

5. Sealing device according to anyone of the claims 1 to 3, **characterized in that** the weakening of the borders (15') and herewith an easy opening of the inner layer (18) is effected at these borders by using a special layer of a plastic material, preferable polypropylene, polystyrol and its copolymers or polyethylene of middle or high density.

6. Sealing device according to anyone of the claims 1 to 5, **characterized in that** a barrier layer is provided of a thermoplastic synthetic film at the outer layer (16), which has a thickness of 5 to 20 micrometers.

7. Sealing device according to anyone of the claims 1 to 6, **characterized in that** the outer layer (16) is manufactured of a flexible or a rigid film of metal and/or plastic.

8. Sealing device according to anyone of the claims 1 to 7, **characterized in that** the outer border (12') of the multi-layer film is arranged approximately flush to the outer side of the border strip (15).

9. Sealing device according to anyone of the claims 1 to 8, **characterized in that** with this adhesive layer (17) a selected adhesion per unit area exists with the first resealing of more than 4 N/cm² and with the resealing after of more than approximately 1 N/cm².

## Revendications

1. Dispositif de fermeture pour un conteneur d'emballage, comportant une première et une deuxième partie de conteneur (11, 12) qui peuvent être fermées l'une à l'autre par soudage à l'aide d'une bande de bord (15) façonnée et qui peuvent être détachées l'une de l'autre en les séparant par traction et être ensuite refermées, au moins une des parties de conteneur (12) étant fabriquée en une feuille multicouches munie d'au moins une couche intérieure (18), d'une couche adhésive (17) et d'une couche extérieure (16) tandis que l'autre partie de conteneur (11) est fabriquée en au moins un matériau en feuille,
**caractérisé en ce que** la couche adhésive (17) prévue entre la couche intérieure (18) et la couche extérieure (16) a une épaisseur inférieure à 10 micromètres, de préférence une épaisseur maximale de 8 micromètres, **en ce que** la bande de bord (15) sous forme de creux est façonnée aussi bien pour l'une que pour l'autre partie de conteneur (11, 12) et que cette bande de bord (15) comporte des arêtes intérieures (15') qui produisent un affaiblissement sur la couche intérieure (18), de sorte que cette couche intérieure se déchire le long de ces arêtes intérieures quand on détache la feuille multicouche pour ouvrir le conteneur.

2. Dispositif de fermeture selon la revendication 1, **caractérisé en ce que** pour les bandes de bord (15) la couche intérieure (18) de la feuille multicouches est soudée au matériau en feuille et qu'on choisit alors pour la couche adhésive (17) un matériau tel que son adhérence à la couche intérieure (18) est inférieure à l'adhérence de la couche intérieure (18) au matériau en feuille de l'autre partie de conteneur (11) de sorte que, quand la feuille multicouche se détache, pour la bande de bord (15) la couche adhésive (17) se sépare au moins en partie de la couche intérieure (18) et/ou de la couche extérieure et continue d'adhérer à la couche extérieure et/ou à la couche intérieure tandis que la couche intérieure (18) continue d'adhérer au matériau en feuille de l'autre partie de conteneur (11).

3. Dispositif de fermeture selon la revendication 1 ou 2, **caractérisé en ce que** la couche adhésive (17) à effet d'adhérence durable est au moins en partie fabriquée en une colle thermofusible sans solvant.

4. Dispositif de fermeture selon l'une des revendications précédentes 1 à 3, **caractérisé en ce que** pour les arêtes (15') de la bande de bord (15) l'affaiblissement est produit en appliquant une pression sur les formes d'outil utilisées pour souder la feuille multicouches à l'autre partie de conteneur (11).

5. Dispositif de fermeture selon l'une des revendications précédentes 1 à 3, **caractérisé en ce qu'**on produit l'affaiblissement des arêtes (15'), et donc une légère déchirure de la couche intérieure (18) pour ces arêtes, en utilisant une couche spéciale en une matière plastique, de préférence en polypropylène, en polystyrène et leurs copolymères ou en polyéthylène moyenne ou grande densité.

6. Dispositif de fermeture selon l'une des revendications précédentes 1 à 5, **caractérisé en ce qu'**on prévoit une couche barrière en un film thermoplastique en matière plastique pour la couche extérieure (16) et que son épaisseur a de 5 à 20 micromètres.

7. Dispositif de fermeture selon l'une des revendications précédentes 1 à 6, **caractérisé en ce que** la couche extérieure (16) est fabriquée en un film souple ou rigide en métal et/ou en matière plastique.

8. Dispositif de fermeture selon l'une des revendications précédentes 1 à 7, **caractérisé en ce que** le bord extérieur (12') de la feuille multicouches est pratiquement en affleurement par rapport au côté extérieur de la bande de bord (15).

9. Dispositif de fermeture selon l'une des revendications précédentes 1 à 8, **caractérisé en ce que**, grâce à cette couche adhésive (17), lors de la première fermeture on a par unité de surface une adhérence souhaitée supérieure à 4 N/cm² et lors d'une nouvelle fermeture supérieure à environ 1 N/cm².
